# EUROPÄISCHE PATENTSCHRIFT

(11) **EP 0 926 415 B1**
(45) Veröffentlichungstag und Bekanntmachung des Hinweises auf die Patenterteilung: **18.06.2003**
(21) Anmeldenummer: 98122317.5
(22) Anmeldetag: 24.11.1998
(51) Int. Cl.: F16L 19/05, F16L 19/028

(54) **Rohrverbindung**
Pipe connection
Raccord de tuyaux

(30) Priorität: 27.12.1997 DE 19757946
(43) Veröffentlichungstag der Anmeldung: 30.06.1999
(73) Patentinhaber: Parker Hannifin GmbH, 33659 Bielefeld (DE)
(72) Erfinder: Behrens, Günter Dipl.-Ing., 33758 Schloss-Holte (DE); Ehrke, Dieter Dipl.-Ing., 33699 Bielefeld (DE); Udhöfer, Andreas Dipl.-Ing., 33334 Gütersloh (DE)
(74) Vertreter: Linser, Heinz, Physiker

(56) Entgegenhaltungen:
- DE-A- 3 147 050
- DE-A- 4 033 106
- DE-A- 19 520 099
- US-A- 3 273 918

## Beschreibung

Die Erfindung betrifft eine druckfeste und formschlüssige Rohrverbindung, mit umgeformtem Rohr, einem Verschraubungskörper mit einem Innenkonus und einer Überwurfmutter, wobei das umgeformte, mit einer Wulst versehene Rohr ein entsprechend der Tiefe des Konus achsparalleles Endstück aufweist, dem sich eine radial verlaufende Anschlagringfläche anschließt, welche im montierten Zustand der Rohrverbindung an der Stirnfläche des Rohrverbindungsstutzens zur Anlage kommt, und zwischen dem Konus, dem achsparallelen Endstück des Rohres und der radial verlaufenden Anschlagringsfläche ein Dichtungsring angeordnet ist.

Rohrverbindungen mittels Rohrumformung sind in den verschiedensten Ausführungsformen bekannt.

Aus der DE 40 33 106 A1 ist eine Anschlußarmatur für Rohre bekannt, die aus einem mit Befestigungswulst versehenen Rohrende besteht. Die Anschlußarmatur besteht aus diversen Dicht- und Halteelementen und ist sehr kompliziert aufgebaut. Über die Herstellung des Haltewulstes am Rohr sind keine Angaben gemacht. Der Befestigungswulst besteht aus einer Rohrschleife von 180°, so daß das Rohrmaterial an dieser Verformungsstelle erheblich belastet ist.

Aus der DE 19520099 der Anmelderin ist eine Rohrverbindung bekannt, welche für druckfeste und formschlüssige Verbindungen geeignet ist und mit einem umgeformtem Rohr, einem Verschraubungskörper mit genormtem 24° Konus und einer Überwurfmutter versehen ist. Es hat sich jedoch bei bestimmten extremen Anwendungen herausgestellt, daß zwei Nachteile auftreten. So besteht bei der Montage die Gefahr, daß das Rohr zum Mitdrehen neigt, so daß dem überwiegend bereits verlegten Rohr dadurch Drehmomente aufgeprägt werden. Ein zweiter Nachteil besteht darin, daß die Rohrverbindung beim Auftreten hoher Schwingungsbelastungen an der Übergangsstelle des Rohres zu seiner Wulst zum Bruch neigt. Die Ursache beider Erscheinungen konnte vom Erfinder ermittelt werden und es konnte festgestellt werden, daß die Überwurfmutter die Drehbewegung während der Montage über die durch das verformte Rohr gebildete Schräge von 45° überträgt. Die unter 45° von der Überwurfmutter auf das verformte Rohr auftreffende Montagekraft läßt sich in einen axialen und in einen radialen Vektor zerlegen. Die Resultierende aus diesen Vektoren wirkt auf die 45°-Schräge und ist um den Faktor 1,414 größer als die Axialkomponente. Die auftretende Resultierende der Radialkomponente entspricht der Kraft, welche für die Mit-Drehbewegung verantwortlich ist.

Soll daher die Mit-Drehbewegung bei der Montage vermieden werden, muß die radiale Kraftkomponente und damit ihre Resultierende reduziert werden.

Es wurde ferner festgestellt, daß die Rohrbrüche beim Auftreten von Schwingungen am Übergang vom geraden Rohr zur 45°-Schräge stattfinden. Durch die Rohrverformung ist in diesem Rohrbereich eine starke Kaltverfestigung vorhanden, welche die Bruchgefahr begünstigt. Durch Reflektion und Brechnung der im Rohrsystem auftretenden longitudinalen und transversalen mechanischen Schwingungen können auch Verstärkungseffekte bewirkt werden.

Der Erfindung liegt die Aufgabe zugrunde, diese beiden aufgeführten Nachteile zu vermeiden oder zu verringern, wobei gleichzeitig die Reibwerte zwischen der Überwurfmutter und dem Rohrmantel verringert und die Montagekräfte damit herabgesetzt werden.

Die Lösung dieser Aufgabe besteht nach der Erfindung darin, daß zwischen der Überwurfmutter und dem umgeformten, mit einer Wulst versehenen Rohr sowie einem Teil des ungeformten achsparallelen Rohres eine Stützhülse angeordnet ist, welche mit den genannten Rohrabschnitten Anlageflächen bildet und der Teil Teil der Rohrverformung, der sich vor dem Übergang zum unverformten Rohr befindet, mit der Stützhülse eine Anlagefläche bildet, welche zur Rohrachse einen Winkel zwischen 15° - 40° aufweist.

Eine solche Stützhülse ist ein wesentliches Element der Erfindung, um in überraschender Weise beide aufgeführten Problemkreise gleichzeitig lösen zu können. Die Stützhülse ermöglicht die Auswahl des genannten und geeigneten Angriffswinkels der Kraft der Überwurfmutter, so daß die Anlagefläche zur Mutter optimal gestaltet und die Resultierende der Radialkomponente auf ein Minimum verringert werden kann. Ferner lassen sich die Reibwerte zwischen der Überwurfmutter und Hülse sowie zwischen Hülse und Rohrmantel in vorteilhafter Weise bestimmen.

Hierzu ist es nach der Erfindung vorteilhaft, wenn die Stützhülse mit der Überwurfmutter vorzugsweise eine radial zur Rohrachse verlaufende Anschlagfläche aufweist, sodaß sich der radiale Vektor der direkt von der Überwurfmutter ausgehenden Montagekraft, welcher für die Mitdrehwirkung verantwortlich ist, auf Null reduziert.

In Weiterbildung der Erfindung erstreckt sich die Anlagefläche der Stützhülse mit dem achsparallen Rohrabschnitt über das Ende der Überwurfmutter hinaus. Hierdurch erfolgt eine erhebliche Dämpfung der im Rohr auftretenden Schwingungen, bevor diese die erste Rohrverformung erreichen, so daß die Bruchgefahr durch auftretende Schwingungen erheblich reduziert wird.

Die Stützhülse bildet in einer alternativen Lösungsform nach der Erfindung mit der Überwurfmutter eine Anlagefläche, welche zur Achse des Rohres einen Winkel zwischen 70° und 100° bildet. Hierdurch läßt sich eine wirksame Reduzierung der Mitdrehneigung erreichen, welche einmal durch die Wahl eines günstigen Anlagewinkels erfolgt und zum anderen durch die Stützhülse an sich, welche eine Drehneigung abfangen kann.

In Weiterbildung der Erfindung ist die Stützhülse an ihrem der Wulst abgekehrten und am Rohr anliegenden Bereich abgerundet ausgebildet, wodurch eine Kerbwirkung am Rohr vermieden wird, die bei der Rohrverformung auftreten kann.

Das Verfahren zur Rohrverformung erfolgt gemäß der Erfindung mit Hilfe eines hydraulischen Gerätes, in dem das Rohr zwischen mindestens zwei Haltebacken eingeklemmt und mit einem Werkzeug gestaucht wird. Hierbei weisen die Haltebacken jeweils an einem dem Stauchwerkzeug zugekehrten Ende eine Ausformung auf, in die das umzuformende Rohr mit seiner entsprechenden Stützhülse eingebracht wird und mittels eines Stauchzylinders durch einen axialen Stauchvorgang derart eingepreßt wird, daß die Außenkontur des Rohres mit seiner Stützhülse sich der Ausformung vollständig anpaßt, und das Rohr unter der Stützhülse gestaucht wird, wobei der Innendurchmesser des Stauchzylinders dem Außendurchmesser des umzuformenden Rohres mit Stützhülse entspricht.

Die Tiefe des Stauchzylinders entspricht der Tiefe des Konus, so daß beim Stauchvorgang des Rohrendes ein achsparalleles Rohrstück erhalten bleibt.

Die Erfindung wird anhand der Zeichnungen näher erläutert. Hierbei zeigen:
- FIGUR 1: einen Teillängsschnitt durch eine Rohrverbindung nach der Erfindung;
- FIGUR 2: einen Teillängsschnitt durch eine Rohrverbindung einer weiteren Ausführungsform nach der Erfindung, und
- FIRUR 3: einen Teillängsschnitt nach Figur 1 zur Veranschaulichung der Druckverhältnisse beim Herstellungsverfahren.

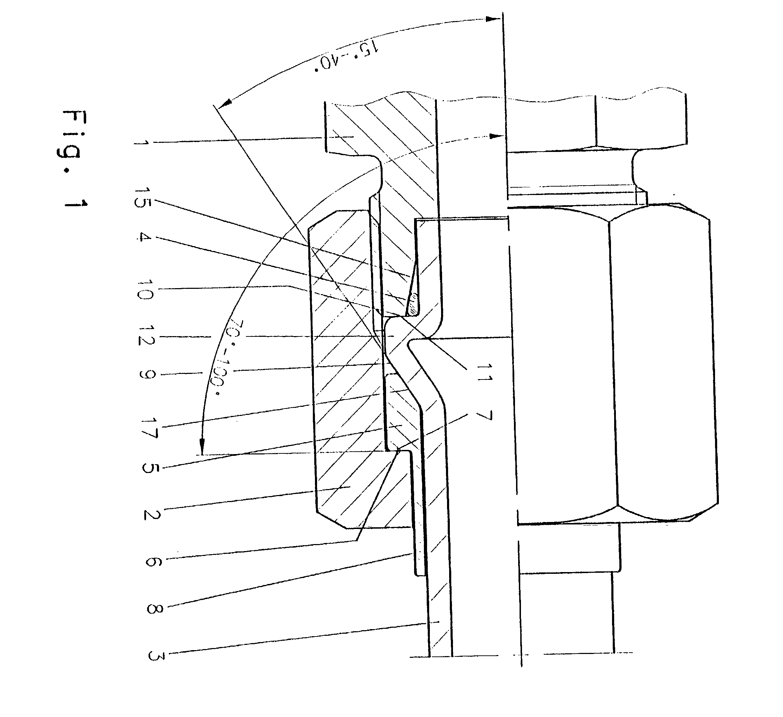

Das in Figur 1 dargestellte Verbindungssystem besteht aus einem Verschraubungskörper 1 mit seinem Konus 15, einer entsprechenden Überwurfmutter 2, einem umgeformten Rohr 3 und einem Dichtring 4. Bei dem Dichtring handelt es sich um einen profilierten Ring, vorzugsweise mit einem symmetrischen Profil, um einen handelsüblichen O-Ring oder um einen Ring mit einem an die Dichtkammer angepaßten Dreiecksprofil.

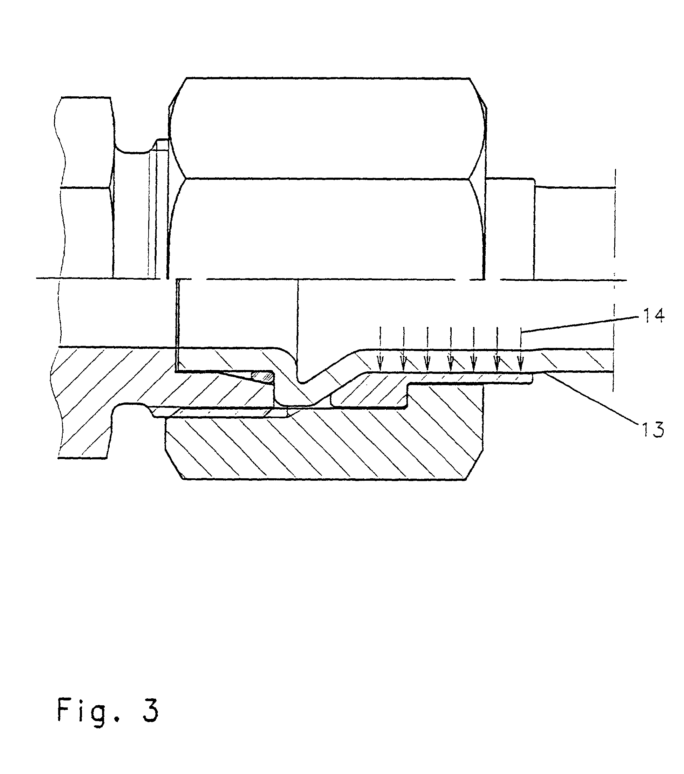

Zwischen der Überwurfmutter 2 und dem Rohr 3 ist eine Hülse 5 angeordnet, welche mit dem inneren radialen Teil 6 der Überwurfmutter einen Anschlag 7 bildet. Die Hülse 5 weist eine Verlängerung 8 auf, die sich über die Überwurfmutter 2 hinaus erstreckt. An dem Rohr 3 wird mit Hilfe eines nicht näher dargestellten hydraulischen Gerätes ein Wulst 12 angeformt. Dies geschieht, indem das Rohr 3 zusammen mit der Hülse 5 zwischen mindestens zwei Haltebacken eingeklemmt und anschließend mit einem Stauchwerkzeug axial gestaucht wird Die Axialbewegung des Stauchwerkzeugs kann z.B. in an sich bekannter Weise mit einem Hydraulikzylinder erreicht werden. Wenn ein Rohr axial gestaucht wird, bildet sich der Wulst stets nach außen. In der Ausführungsform der Rohrverbindung nach der Erfindung wird dieser Wulst in einer speziellen Form hergestellt, welche die äußere Form der Hülse 5 mit umfaßt. Beim Stauchvorgang kommt die sich entwickelnde Schräge 9 des Rohres 3 zur Anlage auf die Schräge der Hülse 5, wodurch die sich berührenden Flächen miteinander einen formschlüssigen Kontakt mit ausgeprägter Haftwirkung bilden, da sich während der Rohrverformung im Stauchwerkzeug das Rohr aufweitet und sich fest gegen die Stützhülse preßt, wie durch die geringförmige Verformung bei 13 angedeutet ist. Hierzu wird auch auf Figur 3 verwiesen, welche der Darstellung nach Figur 1 voll entspricht, wobei jedoch die Pfeile 14 und die Position 13 die Aufweitung des Rohres 3 veranschaulichen.

Insbesondere durch den formschlüssigen Kontakt zwischen der Stützhülse 5 und dem Rohr 3 werden mechanische Schwingungen sowohl transversaler als auch longitudinaler Art erheblich gedämpft, so daß die verbleibende Schwingungsenergie für die verformten Rohrteile keine Bruchgefahr mehr bedeuten.

Das beschriebene Stauchverfahren läßt sich sowohl für dünnwandige als auch für dickwandige Rohre anwenden.

Nach dem öffnen der Haltebacken der nicht dargestellten Preßvorrichtung kann das Rohr 3 mit der fertigen Wulst 12 und der Stützhülse 5 entnommen und zur Herstellung einer Rohrverbindung verwendet werden.

Nachdem das Rohr 3 geformt ist wird auf den zylindrischen Teil vor der Wulst 12 der Dichtring 4 aufgeschoben und anschließend mit dem Rohrverbindungsstutzen 1 verschraubt, dessen Stirnfläche 10 gegen den radial gerichteten Teil der Wulst 12 anschlägt.

Die Fig.1 zeigt eine fertig montierte Rohrverbindung im Halbschnitt durch den Verbindungsstutzen 1 mit dem montierten Rohr 3.

Die Schräge 9 des Rohres 3 ist nach der Erfindung relativ flach auszubilden. Der Winkel zwischen der Achse des Rohres 3 und der Tangente der Schrägen beträgt daher vorteilhaft 15° bis 40°. Durch die Verringerung des Winkels der Tangente zur Achse des Rohres 3 wird auch die bei der Verformung auftretende Kaltverfestigung dieses Rohrabschnittes verringert, so daß auch hierdurch die Bruchgefahr erheblich reduziert wird. Die Verwendung der Stützhülse, die Herstellung eines guten Kontaktes zwischen Hülse und Rohr und die Reduzierung der Kaltverfestigung tragen daher gemeinsam zur Reduzierung der Bruchgefahr bei.

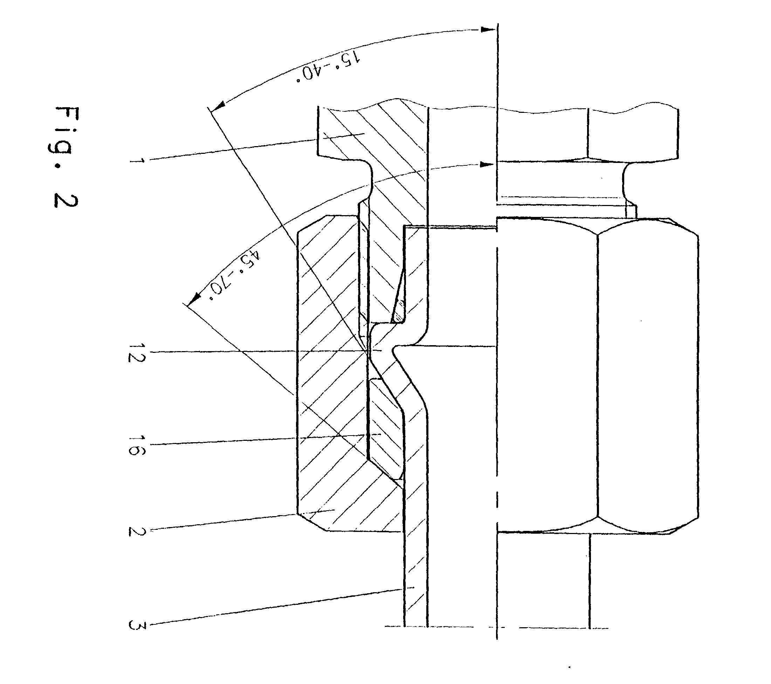

Die Figur 2 zeigt eine alternative Ausführungsform der vorliegenden Erfindung durch Verwendung einer Stützhülse 16 ohne Verlängerung über die Überwurfmutter 2 hinaus. Die Überwwurfmutter 2 umschließt daher den Mantel des Rohres 3 berührungsfrei (Spielpassung). Die Anlagefläche zwischen Überwurfmutter 2 und Stützhülse 16 weist ebenfalls einen spitzen Winkel von 15° bis 40° auf, sodaß die Kraft bei der Montage der Verbindung in einen axialen und einen radialen Kraftverktor aufgeteilt wird. Der radiale Kraftvektor drückt die Stützhülse 16 an das Rohr 3. Am Innendurchmesser ist die Stützhülse 16 im hinteren Bereich abgerundet ausgebildet, damit sich am Rohr 3 bei dem Stauchvorgang und der Ausweitung des Rohres 3 keine Kerbwirkung ausbildet. Durch diese Maßnahme werden Schwingungen, die von der Rohrseite auftreten, von der Stützhülse ebenfalls abgefangen. Der Winkel der Anlagefläche des Stützringes 16 zur Mutter läßt sich so wählen, daß sich eine optimale Aufteilung der Kraftvektoren ergibt und die Stützhülse 16 ausreichend am Rohr 3 angedrückt wird. Der verwendete Winkel liegt hierbei zwischen 45° und 70°.

### Bezeichnungsliste

- 1: Verbindungsstutzen
- 2: Überwurfmutter
- 3: Rohr
- 4: Dichtring
- 5: Stützring
- 6: Anlagefläche, Anschlag
- 7: Anlagefläche, Anschlag
- 8: Rohrabschnitt
- 9: Schräge des Rohres 3
- 10: Stirnfläche des Verbindungsstutzens
- 11: Anschlagfläche der Wulst 12
- 12: Wulst
- 13: Ring geringer Verformung
- 14: Kraft-Pfeile
- 15: Konus
- 16: Stützhülse
- 17: Kontaktfläche Stützhülse-Rohr

## Patentansprüche

1. Druckfeste und formschlüssige Rohrverbindung, mit umgeformtem Rohr (3), einem Verschraubungskörper (1) mit einem Innenkonus (15) und einer Überwurfmutter (2), wobei das umgeformte, mit einer Wulst (12) versehene Rohr (3) ein entsprechend der Tiefe des Konus (15) achsparalleles Endstück aufweist, dem sich eine radial verlaufende Anschlagringfläche anschließt, welche im montierten Zustand der Rohrverbindung an der Stirnfläche des Rohrverbindungsstutzens zur Anlage kommt, und zwischen dem Konus, dem achsparallelen Endstück des Rohres und der radial verlaufenden Anschlagringsfläche ein Dichtungsring (4) angeordnet ist, **dadurch gekennzeichnet, dass** zwischen der Überwurfmutter (2) und dem umgeformten, mit einer Wulst versehenen Rohr (3) sowie einem Teil des achsparallelen Rohres (3) eine Stützhülse (5) angeordnet ist, welche mit den genannten Rohrabschnitten eine Anlagefläche (17) bildet, und der Teil der Rohrverformung, der sich vor dem Übergang zum unverformten Rohr (3) befindet, mit der Stützhülse (5) eine Anlagefläche (9) bildet, welche zur Rohrachse einen Winkel zwischen 15° - 40° aufweist.

2. Rohrverbindung nach Anspruch 1, **dadurch gekennzeichnet, daß** die Stützhülse (5) mit der Überwurfmutter (2) eine radial zur Rohrachse verlaufende Anschlagfläche (7) aufweist.

3. Rohrverbindung nach Anspruch 1 oder 2, **dadurch gekennzeichnet, daß** die Anlagefläche (17) der Stützhülse (5) mit dem achsparallen Rohrabschnitt (8) sich über das Ende der Überwurfmutter (2) hinaus erstreckt.

4. Rohrverbindung nach Anspruch 1 bis 3, **dadurch gekennzeichnet, daß** die Stützhülse (5) mit der Überwurfmutter (2) eine Anlagefläche (7,6) bildet, welche zur Achse des Rohres (3) einen Winkel zwischen 70° und 100° bildet.

5. Rohrverbindung nach Anspruch 1, **dadurch gekennzeichnet, daß** die Stützhülse (5) an ihrem der Wulst (12) anliegenden Bereich (Fig. 1 und 2) und der Wulst abgekehrten und am Rohr (3) anliegenden Bereich (Figur 2) abgerundet ausgebildet sind.

6. Verfahren zur Herstellung eines umgeformten Rohres einer Rohrverbindung nach den Ansprüchen 1 - 5, wobei mit Hilfe eines hydraulischen Gerätes Nahe dem Ende des Rohres eine Wulst angeformt wird, in dem das Rohr zwischen mindestens zwei Haltebacken eingeklemmt und mit einem Werkzeug gestaucht wird, **dadurch gekennzeichnet, daß** die Haltebacken jeweils an einem dem Stauchwerkzeug zugekehrten Ende eine Ausformung aufweisen, in die das umzuformende Rohr mit seiner entsprechenden Stützhülse eingebracht wird und mittels eines Stauchzylinders durch einen axialen Stauchvorgang derart eingepreßt wird, daß die Außenkontur des Rohres mit seiner Stützhülse sich der Ausformung vollständig anpaßt, und das Rohr unter der Stützhülse gestaucht wird.

7. Verfahren nach Anspruch 6, **dadurch gekennzeichnet, daß** die Tiefe des Stauchzylinders der Tiefe des Konus entspricht, so daß beim Stauchvorgang des Rohrendes ein achsparalleles Rohrstück erhalten bleibt.

## Claims

1. Pressure-resistant positive pipe connection with a re-formed pipe (3), a screw connection (1) with an inner tapered part (15) and a sleeve nut (2), in which pipe connection the re-formed pipe (3) which is provided with a widened part (12) incorporates an end part which runs parallel to the axis and is equal to the tapered part (15) in depth and to which end part a radially running annular stop surface is connected which annular stop surface rests against the end face surface of the pipe connection when the pipe connection is in the assembled condition and in which pipe connection a sealing ring (4) is arranged between the tapered part and the end part of the pipe which is parallel to the axis and the radially running annular stop surface, **characterised in that** a support sleeve (5) is arranged between the sleeve nut (2) and the re-formed pipe (3) which is provided with a widened part and a part of the pipe (3) which is parallel to the axis which support sleeve (5) forms a contact surface (17) with the aforementioned pipe parts and in which pipe connection the part of the re-formed pipe which lies ahead of the point of transition to the non-re-formed pipe (3) forms with the support sleeve (5) a contact surface (9) set at an angle of between 15° and 40 ° to the axis of the pipe.

2. Pipe connection in accordance with claim 1, **characterised in that** the support sleeve (5) with the sleeve nut (2) forms a stop surface (7) running radially to the axis of the pipe.

3. Pipe connection in accordance with claim 1 or 2, **characterised in that** that surface (17) of the support sleeve (5) which is in contact with that pipe part (8) which is parallel to the axis extends beyond the end of the sleeve nut (2).

4. Pipe connection in accordance with claims 1 to 3, **characterised in that** the support sleeve (5) with the sleeve nut (2) forms a contact surface (7, 6) which is set at an angle of between 70 ° and 100° to the axis of the pipe.

5. Pipe connection in accordance with claim 1, **characterised in that** the support sleeve (5) **in that** area (Fig. 1 and 2) which lies in contact with the widened part (12) of the pipe and **in that** area (Figure 2) which faces away from the widened part of the pipe and lies in contact with the pipe (3) is constructed round.

6. Method of manufacturing a re-formed pipe of a pipe connection in accordance with claims 1 to 5 by which method a widened part is formed near the end of the pipe with the aid of an hydraulic device in which the pipe is clamped between at least two holding members and upset with a tool, **characterised in that** each of the holding members incorporates at its end which faces the upsetting tool a formed part into which the pipe to be re-formed and its corresponding support sleeve is inserted and in an axial upsetting operation is pressed inwards by means of an upsetting cylinder such that the outer contour of the pipe with its support sleeve is formed to correspond to the formed part of the holding members and the pipe under the support sleeve is upset.

7. Method in accordance with claim 6, **characterised in that** the depth of the upsetting cylinder is equal to the depth of the tapered part such that when the pipe end is upset a part of the pipe which is parallel to the axis is retained.

## Revendications

1. Jonction de tuyau résistante à la pression et obtenue par adhérence des formes, composée d'un tuyau déformé (3), d'un corps de raccord (1) avec cône intérieur (15) et écrou à collet (2), sachant que le tuyau (3) déformé doté d'un bourrelet (12) présente une pièce terminale axialement parallèle conformément à la profondeur du cône (15), pièce à laquelle vient se raccorder une surface au tracé radial d'un anneau butée, ladite surface venant appliquer contre la surface frontale de l'embout de la jonction de tuyauterie lorsque cette jonction de tuyauterie se trouve à l'état monté, et sachant qu'entre le cône, la pièce terminale axialement parallèle du tuyau et la surface au tracé radial de l'anneau butée se trouve un anneau d'étanchéité (4), et **caractérisée en ce qu'**entre l'écrou à collet (2) et le tuyau déformé (3) doté d'un bourrelet ainsi qu'une partie du tuyau (3) axialement parallèle, se trouve une douille d'appui (5) qui forme avec les segments de tuyau indiqués une surface d'applique (17), et **en ce que** la partie de la déformation du tuyau qui se trouve en amont de la transition vers le tuyau non déformé (3) forme avec la douille d'appui (5) une surface d'applique (9) dont l'angle par rapport à l'axe du tuyau est compris entre 15 et 40°.

2. Jonction de tuyau selon la revendication 1, **caractérisée en ce que** la douille d'appui (5) présente avec l'écrou à collet (2) une surface d'applique (7) au tracé radial par rapport à l'axe du tuyau.

3. Jonction de tuyau selon la revendication 1 ou 2, **caractérisée en ce que** la surface d'applique (17) de la douille d'appui (5) s'étend, avec le segment (8) axialement parallèle du tuyau, au-delà de l'extrémité de l'écrou à collet (2).

4. Jonction de tuyau selon les revendications 1 à 3, **caractérisée en ce que** la douille d'appui (5) forme avec l'écrou à collet (2) une surface d'applique (7,6), laquelle surface forme elle-même, avec l'axe du tuyau (3), un angle compris entre 70 et 100°.

5. Jonction de tuyau selon la revendication 1, **caractérisée en ce que** la douille d'appui (5), dans sa zone jointive du bourrelet (12) (fig. 1 et 2), et dans sa zone opposée au bourrelet et en applique contre le tuyau (3) (figure 2), présente une configuration arrondie.

6. Procédé de fabrication d'un tuyau déformé destiné à une jonction de tuyau selon les revendications 1 à 5, sachant qu'à l'aide d'un appareil hydraulique on forme un bourrelet près de l'extrémité du tuyau, en coinçant le tuyau entre au moins deux mâchoires de retenue et en refoulant le tuyau avec un outil, **caractérisé en ce que** les mâchoires de retenue présentent chacune une cavité formée située à une extrémité regardant l'outil de refoulement, cavité dans laquelle on introduit le tuyau à déformer avec sa douille d'appui correspondante, et dans laquelle, au moyen d'un vérin de refoulement et par une séquence de refoulement axial, on presse le tuyau et la douille d'appui de telle sorte que le contour extérieur du tuyau avec sa douille d'appui vienne entièrement épouser la forme de la cavité, et que le tuyau situé sous la douille d'appui soit refoulé.

7. Procédé selon la revendication 6, **caractérisé en ce que** la profondeur du vérin de refoulement correspond à la profondeur du cône, de sorte que pendant la séquence de refoulement de l'extrémité du tuyau on conserve un segment de tuyau axialement parallèle.
